**Europäisches Patentamt**

**European Patent Office**

**Office européen des brevets**

(19)

(11) **EP 1 489 560 A1**

(12) **EUROPEAN PATENT APPLICATION**

(43) Date of publication:
**22.12.2004 Bulletin 2004/52**

(51) Int Cl.$^7$: **G06T 15/20**

(21) Application number: **03101763.5**

(22) Date of filing: **17.06.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** | (72) Inventor: **The designation of the inventor has not yet been filed** |
| (71) Applicant: **Koninklijke Philips Electronics N.V. 5621 BA Eindhoven (NL)** | (74) Representative: **de Jong, Durk Jan et al Philips Intellectual Property & Standards P.O. Box 220 5600 AE Eindhoven (NL)** |

(54) **Primitive edge pre-filtering**

(57) A computer graphics system renders an image using forward texture mapping. Image pixels form a pixel grid in a screen space. Objects of the image are modeled by primitives. A texture memory 134 stores a texture map with texels forming a texel grid in a texture space. A rasterizer 120 determines for each primitive in the texture space associated texels that at least partly fall within the primitive and assigns texel attributes to those texels. A texel shader 130 transforms texel attributes to color attributes. A contribution filter 810 filters a continuous signal describing the primitive, yielding, when sampled for a given texel position, a respective contribution factor providing a measure of overlap of the corresponding texel with the primitive in texture space. A screen space resampler 140 resamples color attributes of the texels according to the pixel grid forming display pixel data using the contribution factor as a weight.

FIG.8

## Description

### FIELD OF THE INVENTION

The invention relates to a computer graphics system and a method of computer graphics processing.

### BACKGROUND OF THE INVENTION

An important element in rendering 3D graphics is texture mapping. Mapping textures onto surfaces of computer-generated objects is a technique which greatly improves the realism of their appearance. The texture is typically a 2D picture, such as a photograph or computer generated image. For example, (part of) a 2D image of a wall may be projected on a 3D representation of a wall in a computer game. The term "texture" is used as a synonym for any image or structure to be mapped onto an object. The term "texel" (texture element) is used to refer to a picture element (pixel) of the texture. In general, there are several methods known for mapping the texture onto the screen grid. Most conventional computer graphics systems use a so-called inverse texture mapping approach. In this approach, pixels of the screen are processed sequentially and for each pixel, during a rasterization process, a projection of the screen pixel on the texture (resulting in a projected pixel's "footprint" in texture space) is determined and an average value which best approximates the correct pixel color is computed. This involves determining the texels that overlap with the projected pixel footprint. An alternative approach is the so-called forward texture mapping method. This method works by traversing texels in the coordinate system defined by the texture map (i.e. starting from the texture space). The texel colors are then splatted to the screen pixels, using resamplers commonly used for video scaling. This resampling may include a reconstruction in texture space, a mapping from texture space to screen space, and pre-filtering and sampling in screen space. The contribution of a texel is then splat to (i.e. distributed over) pixels of which the pre-filter footprint overlaps with the reconstruction filter footprint of the texel.

A 2D or 3D object to be rendered is typically modeled using primitives (usually triangles). A vertex shader of the graphics system receives the vertices of a primitive as input and uses a vertex shading program to change or add attributes for each of these vertices. A rasterizer accepts vertex coordinates which define vertices of the primitives. In a forward mapping system, the rasterizer traverses the primitive in texture space while interpolating these attributes. For each grid position ($u$, $v$) of the texture visited during traversal, a texel shader calculates from these attributes the local color of the surface of the primitive. These surface colors are then mapped and resampled to screen pixel locations by the screen space resampler.

## SUMMARY OF THE INVENTION

It is an object of the invention to provide a computer graphics system able to provide a higher quality forward texture mapping.

To meet the object of the invention, a computer graphics system for rendering an image for display using forward texture mapping, pixels of the image being specified according to a predetermined pixel grid in a screen space; the image including at least one object modeled by primitives; includes:

- a texture memory for storing at least one texture map; texels of a texture map being specified according to a predetermined texel grid in a texture space;
- a rasterizer operative to, for each primitive in the texture space, determine associated texels that at least partly fall within the primitive and to assign texel attributes to the associated texels;
- a contribution filter (810) operative to, for each primitive in the texture space, filter a continuous signal describing the primitive, yielding, when sampled for a given texel position, a respective contribution factor providing a measure of overlap of the corresponding texel with the primitive in texture space;
- a texel shader (130) operative to, for each primitive in the texture space, transform texel attributes of the associated texels to color attributes of the texels; and
- a screen space resampler (140) operative to resample color attributes of the texels according to the predetermined pixel grid forming pixel data for the display using the contribution factor as a weight.

The inventor has realized that the quality of the graphics system can be improved by performing a filtering step in texture space, in addition to the resampling in screen space. By filtering a continuous signal that describes the primitive, before sampling it for a visited texel location, a contribution factor is assigned that depends on a measure of overlap of the texel with the primitive in texture space. For a polygon, the continuous signal represents being inside or outside the primitive, typically specified by the primitive's edges using its vertices. In the prior art forward texture mapping systems, texels were ignored it they were outside the primitive, even though the footprint of the texel partly overlapped the boundary of the primitive. The system according to the invention achieves a higher quality rendering, in particular for narrow objects where the prior art mechanism resulted in stronger aliasing effects. The primitive may, in principle, be any suitable shape. Commonly used shapes are polygons, in particular triangles.

According to the measure of the dependent claim 2, the contribution factor depends on a percentage of area overlap of a texel footprint in the texel grid with the primitive. This can be seen as using a box filter for filtering the primitive boundary signal.

In a preferred embodiment, according to the measure of the dependent claim 3, the area overlap is determined analytically. This gives an accurate result of the percentage of area overlap.

According to the measure of the dependent claim 4, the analytic determination includes determining, for a texel footprint that is not is fully outside or inside a primitive, intersection points between a boundary of the primitive and a boundary of the texel footprint. Knowing the intersection points, in particular for polygons, makes it simple to determine the percentage of overlap.

According to the measure of the dependent claim 5, boundary equations for the boundary of the primitive are pre-calculated. This enables a fast determination of the intersection point of the primitive boundary with the texel footprints.

To meet an object of the invention, a method of rendering an image for display using forward texture mapping, pixels of the image being specified according to a predetermined pixel grid in a screen space; the image including at least one object modeled by primitives; the method including:

- storing at least one texture map; texels of a texture map being specified according to a predetermined texel grid in a texture space;
- for each primitive in the texture space, determining associated texels that at least partly fall within the primitive and to assign texel attributes to the associated texels; filtering a continuous signal describing the primitive, yielding, when sampled for a given texel position, a respective contribution factor providing a measure of overlap of the corresponding texel with the primitive in texture space; and transforming texel attributes of the associated texels to color attributes of the texels; and
- resampling color attributes of the texels according to the predetermined pixel grid forming pixel data for the display using the contribution factor as a weight.

These and other aspects of the invention are apparent from and will be elucidated with reference to the embodiments described hereinafter.

Brief description of the drawings

In the drawings:

Fig. 1 shows a graphics pipeline in which the invention may be used;
Fig.2 shows a 4D mipmap structure;
Fig.3 illustrates reconstruction filtering;
Fig.4 illustrates screen space pre-filtering;
Fig.5 shows the texture pre-filtering according to the invention;
Fig. 6 illustrates area pre-filtering;
Fig.7 provides a further example of area pre-filtering;
Fig. 8 shows the contribution filter according to the invention in the form of an area pre-filter;
Figs.9 and 10 compares the outcome of a system without and with texture space area pre-filtering;
Fig.11 illustrates improvements achieved for adjacent triangles; and
Fig. 12 illustrates the invention in the form of an improved texture space reconstruction filter;
Fig.13 illustrates this for a 2D representation of the reconstruction filter footprint; and
Fig. 14 shows a block diagram of a computer incorporating the graphics system according to the invention.

DETAILED DESCRIPTION OF THE PREFERRED EMBODIMENT

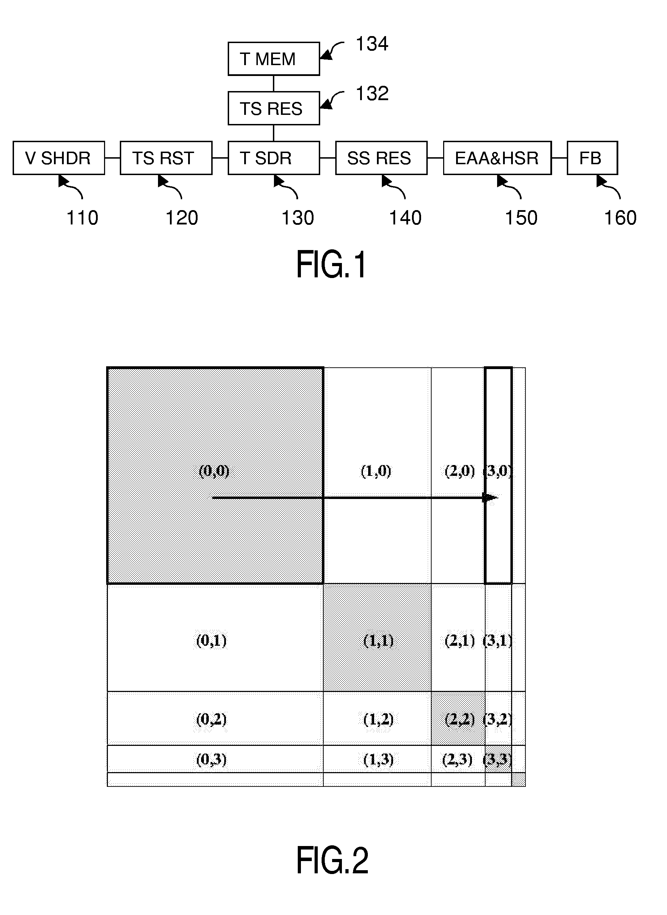

Fig.1 shows an exemplary architecture of the last stages of a graphics pipeline in which the invention may be utilized. In this description it is assumed that the models to be visualized are described using triangles as primitives. Persons skilled in the art can easily apply the same techniques to other primitives, such as other polygons or quads or curved surfaces such as Bezier patches. Input to the pipeline are primitives specified by its vertices by a graphics program, such as a computer game, and the earlier stages of the graphics pipeline. The primitives are given in the screen space, using (x, y) coordinates as well as the respective texel space, using $(u, v)$ coordinates. The pipeline includes a vertex shader 110, texture space rasterizer 120, texel shader 130 with a texture space resampler 132 and texture memory 134, a screen space resampler 140 and an Edge Anti-Aliasing and Hidden Surface Removal (EAA & HSR) unit 150. The outputted pixels are stored in a frame buffer 160 for display, for example using a D/A converter, such as a RAM DAC, to generate analogue output. If so desired also a digital interface, such as DVI, may be used to supply the pixel data to a display. The display may be of any type, including CRT, LCD, plasma display. Alternatively, the rendered picture may also be used as a texture map for subsequent primitives. The functions of the graphics pipeline shown in Fig.1 will now be described in more detail to illustrate an exemplary system in which the invention may be used.

The vertex shader 110 receives the vertices of a triangle (primitive) as input and uses a vertex shading program to change or add attributes for each of these vertices. The data provided by the vertex shader usually includes attributes like diffuse and/or specular colour, texture coordinates, (homogeneous) screen coordinates, and sometimes extra data like surface normals or other data required for the shading process. The vertex shader may be a traditional Transform and Lighting unit. The attributes generated by the vertex shader are offered to a rasterizer.

The rasterizer 120 traditionally operated in screen space. Such a rasterizer used a scanline algorithm to traverse the pixels which lie within the projection of the primitive on the screen, by selecting the screen coordinates from the vertex attributes as driving variables for the rasterization process. In the forward texture mapping system in which the invention is used, the rasterizer operates in surface space. The surface space rasterizer traverses a parameterization of the surface of the primitive (rather than the projection on the screen), by selecting, for example, the texture coordinates (instead of screen coordinates) as the driving variables for the rasterization process. The rasterizer traverses the primitive over a "surface grid". The grid associated with a texture map provides such a surface grid, and is preferably used as surface grid (since obtaining texture samples on a texture grid does not require resampling). In absence of texture maps, or when for example textures are 1D or 3D, another grid may be chosen. As the coordinates in the texture space are used $u$ (for the 'horizontal' direction) and $v$ (for the 'vertical' direction). It will be appreciated that 'horizontal' and 'vertical' are in this description only relative. For example, the screen may be rotated, leaving the graphics processing unaffected but rotating the output on the screen. Since the texture grid is often used as the surface grid, the notation "texture grid" (and "texture space" and "texel") will be used to denote such generalized grids (and associated spaces and samples). As the rasterizer traverses the texel positions of the grid, all attributes that were given at each vertex are interpolated over the grid (typically linearly, except for the screen coordinates to which a texel is projected, which are interpolated perspectively). The attributes are then available at each texel location, where the texel shader 130 can use them. While traversing the $u$ and $v$ texture coordinates of the base grid, the rasterizer also maintains the corresponding screen coordinates $(x, y)$, where x represents the horizontal pixel position and $y$ represents the vertical pixel position. The correspondence can be maintained by linear interpolation of $\hat{x}$, $\hat{y}$ and $w$, where the $\wedge$ denotes homogeneous coordinates. Such coordinates are well-known in the art and will not be described any further here. Screen coordinates can then be calculated using the perspective division $x = \frac{\hat{x}}{\hat{w}}$ and $y = \frac{\hat{y}}{\hat{w}}$. The w w screen y coordinate is only used for mipmap determination purposes, as will be explained in more detail below. For computing the actual colors, the rasterizer may interpolate diffuse color (RGBA), specular color (RGB) and extra texture coordinate pairs (allowing for multi-texturing). Also other attributes (such as a surface normal) may be interpolated.

Preferably, the texture space rasterizer traverses the texture map on a grid corresponding to 4D mipmapping, as illustrated in Fig.2. Using mipmapping, in a preprocessing step several downscaled versions of the original texture (2D picture) are created. During texture mapping, the part of only the smaller downscaled picture which matches best in resolution with the screen image is read and mapped to the screen. The original 2D picture along with its downscaled versions is called a mipmap. Texture mapping as well as mipmaps are particularly described in "Survey of Texture Mapping Paul S. Heckbert, IEEE Computer Graphics and Applications, Nov. 1986, pp. 56-67 and in U.S. 6,236,405 B1. In a mipmap, the original image is denoted as level 0. In level 1, each entry holds an averaged value of, for example, 2x2 texels. As used herein the term "texel" (texture element) refers to a picture element (pixel) of the texture. This can be continued until the top-level is reached, which has only one entry holding the average color of the entire texture. Thus, in a square mipmap where subsequent levels are scaled using a factor of two in each direction, level n has one fourth the size of level $n$-1. Other scaling factors may be used as well. Several types of mipmaps are known, varying in which downscaled images are stored. In a 3D mipmap, both directions are downscaled by the same factors, while in a 4D mipmap the original image is downscaled independently in both dimensions. Compared to the 3D mipmap, the 4D mipmap arrangement requires a lot of memory to store. Computer graphics programs, such as games, therefore, often use the 3D mipmap structure. An earlier application IB02/05468 of the applicant, and sharing an inventor with the present application describes a method for generating a 4D mipmap on the fly from a 3D mipmap. This enables high quality rendering also in combination with programs that do not supply a 4D mipmap to the graphics system. A 3D mipmap is specified by the mipmap level. A 4D mipmap is specified by a horizontal mipmap level $mml_u$ and a vertical mipmap level $mml_v$. Fig.2 shows a 4D mipmap giving details of 16 mipmaps (0,0), (1,0), ..., (3,3). The mipmaps indicated in gray (0,0), (1,1), (2,2), and (3,3) form the original 3D mipmap levels 0, 1, 2, and 3, respectively. The rasterizer supplies the 4D mipmap levels $(mml_u, mml_v)$.

The texel shader 130 computes for each texel the local surface color. The texel shader operates on the attributes on grid positions in the surface grid and if there are any secondary textures associated with the primitive, it uses inverse mapping with standard texture space resamplers to obtain colors from these. When texture data is needed, the texture space resampler is used to obtain a texture sample given the texture coordinates. These texture coordinates are generated by the texel shader based on the interpolated coordinates received from the rasterizer and any results from previous texture fetches (so-called dependent texturing) and/or calculations. The texture filter operation is usually based on bilinear or tri-linear interpolation of nearby texels, or combinations of such texture probes to approximate an anisotropic (perspectively transformed) filter footprint. The 2D resampling operations of the texel space resampler can efficiently be executed in two 1D resample passes using 1D FIR filter structures. In a situation where the 4D mipmap is constructed on the fly, a texture fetch then amounts to 4D mipmap reconstruction from the 3D mipmap data stored in the texture memory 134. In the example of Fig.2, the 4D mipmap (3,0) is reconstructed through downsampling of the 3D mipmap level 0. A fetched texel can be combined with interpolated diffuse and/or specular color resulting in a color sample of the surface with associated (generally non-integer) screen coordinates which indicate where this texture sample is mapped to on screen.

The screen space resampler 140 splats mapped texels to integer screen positions, providing the image of the primitive on the screen. The screen space resampling includes the following operations:

- Reconstructing the color information in the texel grid to a continuous signal,
- Mapping the continuous signal from the texture space to the screen space,
- Pre-filtering the mapped continuous signal in screen space, and
- Sampling the pre-filtered signal in screen space.

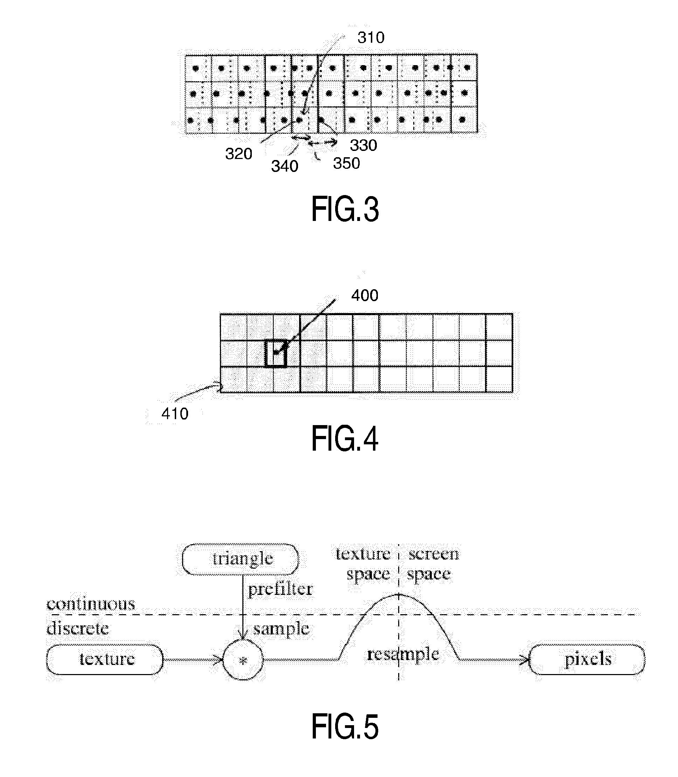

Fig. 3 illustrates the reconstruction filtering using a box as the footprint of the reconstruction filter. Other filters, such as higher order filters may also be used. The figure shows a grid of texels. Each texel is shown as a rectangle representing the image surface covered by the pixel. The footprints of the original texels are taken and projected onto the screen. This does not only change the position but also the size of these input footprints. The size and location of an exemplary transformation are shown as the rectangles with dashed lines in Fig.3. The solid dots illustrate the location the dimensionless input texel coordinate (typically coinciding with the middle of the input texel footprint) after the transformation. As part of the transformation, the size of the box in the texel output domain is computed. During the reconstruction filtering, input texels that appear to be occluded during the terrain traversal may be dropped and not reconstructed. Also a more refined reconstruction may be used, particularly a contribution proportional to the non-occluded part of the first order reconstructed texel of the image. Fig.3 shows the result of the box reconstruction and occlusion handling. The size of the boxes is a measure for the contribution of the original texel. For example, the reconstructed footprint of input texel 320 (i.e. the footprint after transformation) is indicated by the segment 340. In this example, the reconstructed footprint is approximately 75% of the footprint of the output texels. In this case, the contribution of input texel to the output image is set to a factor of 0.75. The reconstructed mapped footprint of input texel 330 falls partly in output texel 310 and partly in the output texel to the right of 310. The reconstructed footprint of input texel 330 is roughly 25% of the footprint of output texel 310 and roughly 75% of the footprint of the neighboring output texel. The total contribution of input texel 330 is then 25% +75%. As illustrated in Fig.4, next, each output texel is then splat to (i.e. distributed over) pixels in the screen space of which the pre-filter footprint in screen space overlaps with the reconstructed box in the screen space (i.e. after mapping the texel to screen space). The reconstructed box of pixel 400 is shown with the highlighted rectangle 410. The pre-filter footprint may extend over several pixels. The filter may extend only horizontally, but may also have a vertical extent. In the example of Fig.4, a filter is used that with both a horizontal and vertical extent of three pixels, centered on the pixel to which it belongs and covering two neighboring pixels. In this case, twelve output pixels receive a contribution. For each of those output pixels the contribution is determined by using the shape of their respective pre-filter to weigh the input pixel value.

The pixel fragments coming from the screen space resampler are then combined in the Edge Anti-Aliasing and Hidden Surface Removal (EAA & HSR) unit 150, which uses a fragment buffers 160. Pixel fragments are depth-sorted into this buffer to solve the hidden surface problem. After all primitives have been rendered, all visible fragments for each pixel are combined (which mostly amounts to simple summation since the screen space resampler delivers colors already weighted by the pre-filter) and sent to the frame buffer. Edge anti-aliasing results from combining the partial contributions generated by the screen space rasterizer near the edges, resulting in a final pixel color which can be a combination of colors from different primitives.

The pipeline as shown in Fig. 1 features two resampling stages: the texture space resampler 132 controlled via the shader, and the screen space resampler 140 for performing the resampling to the display grid. Texture mapping can be seen as a resampling process from texture samples (texels) to screen samples (pixels). High quality texture and edge anti-aliasing can be achieved by use of screen space pre-filtering before the sampling process which is the last step of resampling. However, more sampling than just texture (re) sampling is performed when rasterizing a primitive. The rasterizer itself samples the triangle when determining which rasterization grid positions should be visited. This sampling process can also lead to aliasing. This can be reduced by using an additional pre-filter, now operating in texel space, to avoid artefacts. The rasterization process for triangles has two inputs: a texture signal in the form of a discrete texture map, and a triangle signal in the form of the three vertices which describe a continuous triangle signal. Conventionally, this signal, say with value 1 within the triangle and 0 outside, acts as a kind of a discrete contribution signal, which determines that texture information outside the triangle should not, and texture information inside the triangle should fully contribute. During the conventional rasterization process this signal is sampled, by exactly visiting those grid positions where the triangle signal is 1. For such a grid position the texel color is taken to contribute fully. This results in aliasing. According to the invention, it is assured that texels near the edge (in and outside the triangle) only contribute partially. This can be accomplished by pre-filtering the continuous contribution signal, to obtain contribution values between 0 and 1 near the edges. This pre-filtering process will first be described in more detail below. Alternatively, the filtering can be seen as a better form of reconstruction filtering in the resampling process from texture space to screen space. This view is presented following the description of the texture space pre-filtering.

Texture space pre-filtering

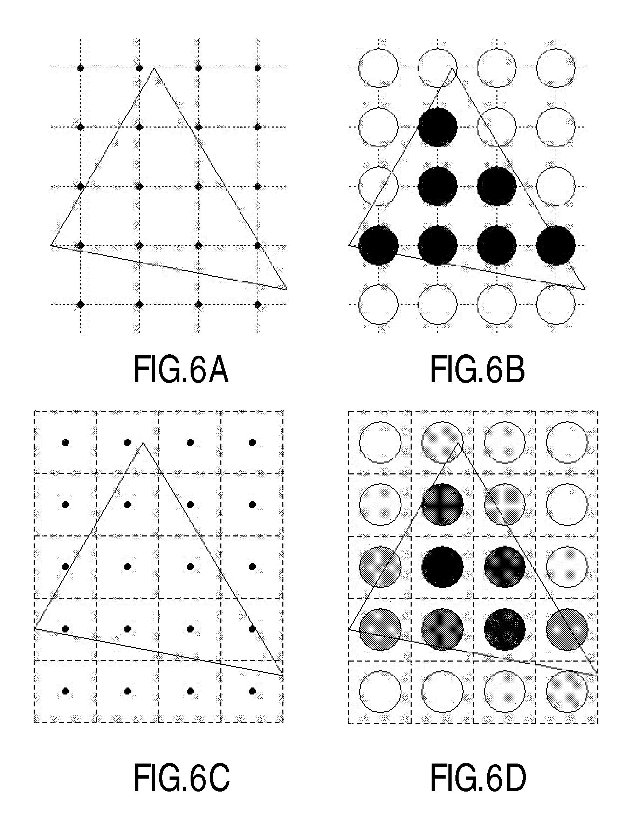

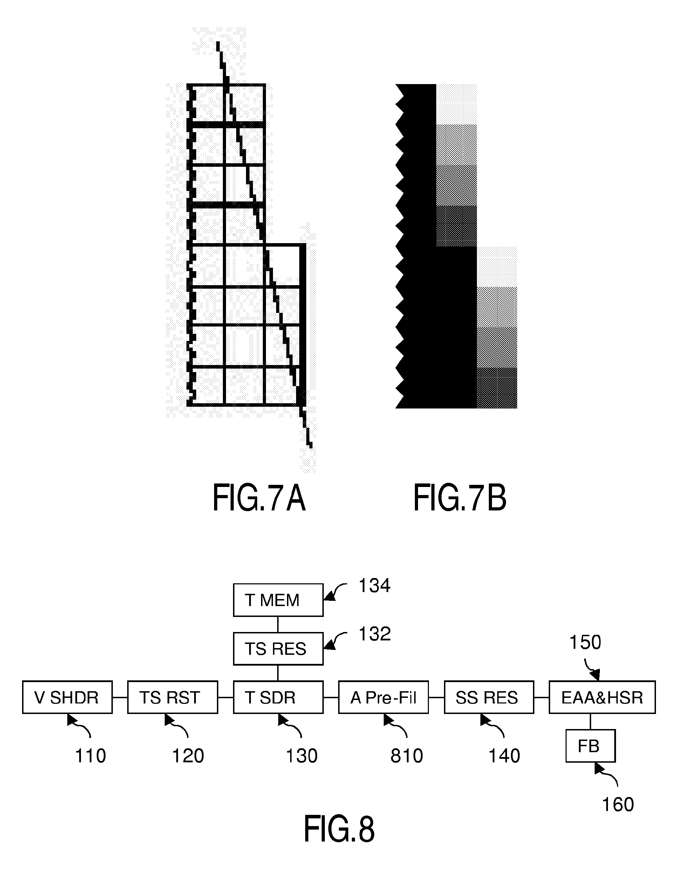

When using forward texture mapping, a texture space rasterizer is used. The triangle signal is considered in texture space and pre-filtered to avoid texture-space edge aliasing. This is depicted in Fig.5. Without pre-filtering, each texel in the input texture is either mapped to screen space (if its position lies within the triangle), or not. So either a texel fully contributes or not at all. The subsequent resampling process will use the sample to reconstruct a continuous signal in the neighborhood of the sample using a box filter. If part of that area was not inside the triangle, the texel contributes too much, and a texel might not contribute enough if the texel lies just outside the triangle, but the reconstructed signal still has overlap with the triangle. Pre-filtering the triangle helps to correct this. In principle any suitable filter may be used. Using a box filter, the pre-filter can be seen as area reconstruction. Other suitable filters include the tent filter, the cubic b-spline filter, etc. The area filtering, using a box filter, is depicted in Fig.6. In Fig.6A, a sample grid is shown with a triangle. In Fig.6B, this signal is sampled (with black dots indicating full contribution, and white dots indicating no contribution), reflecting the prior art point sampling done by the texture space rasterization/resampling. In Fig.6C, the triangle is shown again with the pre-filter footprint areas associated with the box filter marked in dashed lines. Fig.6D shows the contribution (as the gray level of the dots) in correspondence to the amount of overlap between the triangle and the filter footprint for each texel. This amounts to box pre-filtering of the triangle signal, where the percentage of area overlap between the texel footprint and the triangle is used to determine the initial contribution for a texel (which is used in the subsequent resampling process). Fig.7 shows a further example. Fig. 7A shows a boundary of the triangle intersecting the box footprints of texels. Fig.7B shows the resulting contribution factors indicated using gray levels.

In a preferred embodiment as shown in Fig. 8, the area pre-filtering 810 is performed right after the texel shader 130, when the color for the current position of the rasterizer grid is known (the area calculation could be performed in parallel with the shading calculations if need be). This color is sent to the screen space resampler, which also accepts a contribution value. Traditionally, this contribution factor is one. With the area pre-filtering method, the area coverage fraction is used as contribution input to the resampler. The area pre-filtering then boils down to calculating the fraction of the rectangular filter footprint of the texel which is covered by the triangle. The area fraction may be determined in any suitable way. For example, an approximating approach may be used where the area fraction is calculated using super-sampling where the footprint is sampled using point-in-triangle tests to see if such a sample is within or outside the triangle, and computing the fraction of samples that are inside. Alternatively, the fraction may be determined analytically. For triangles, tests showed that the analytical approach was more efficient. Using the analytical approach, first a check may be performed to see if the filter footprint completely lies within the triangle (this is an often occurring case when the texel footprint lies in the triangle interior, far from any edge). If this is the case, the area fraction is one. If not, a check is performed on the further special case where the triangle is completely contained within the footprint. In this case, the area fraction can be calculated as the ratio between the triangle area and the footprint area. If neither of these two special cases applies, the intersection points between the triangle edges and the footprint edges are calculated, and the area of the thereby constructed polygon is used to calculate the area fraction. Determining intersection points of triangles and box footprints falls well within the skills of a person skilled in the art. It should be noted that the rasterizer will normally not visit texels with no overlap with the triangle. If a simplified rasterizer might visit such texels, a fraction of 0 should be generated

In order to accelerate the point containment and intersection calculations, it is preferred to pre-calculate the (texture space) edge equations for the triangle once per triangle as part of the triangle setup. The area coverage fraction is the ratio of the footprint area within the triangle and the total footprint area. The latter only depends on the current mipmap level and can therefore be initialized once, and need only be updated when a mipmap level switch occurs.

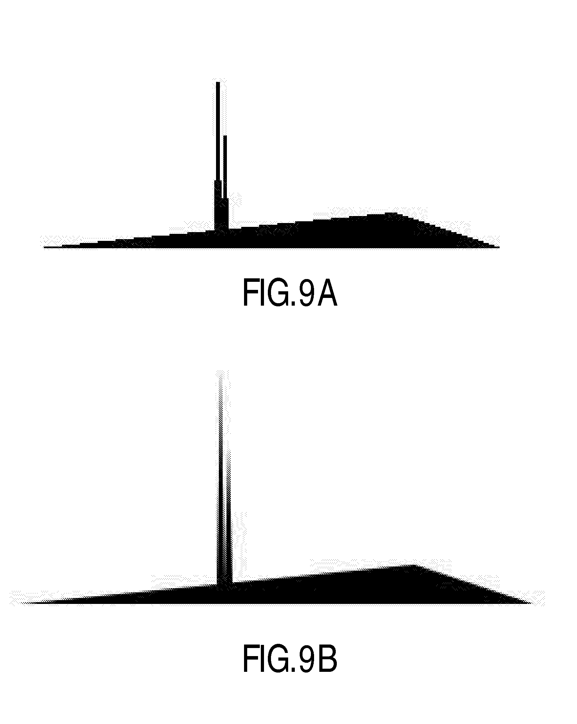

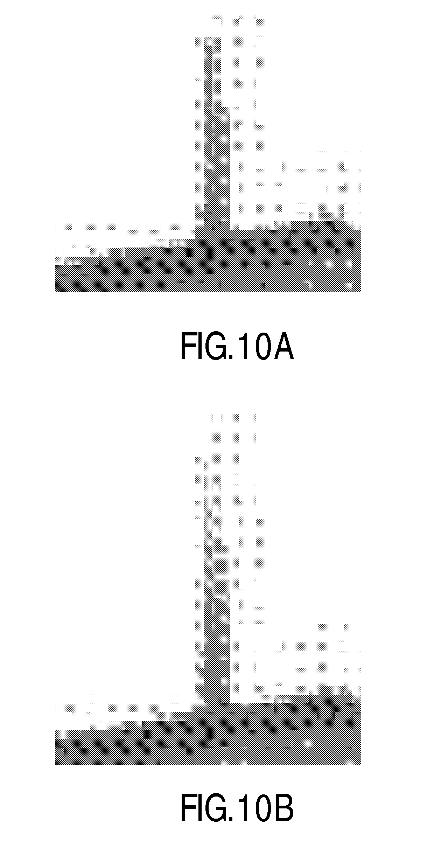

The pre-filtering particularly helps with dealing with small triangles, which might otherwise be missed, or contribute too much, and lead to a staircase reconstruction of the triangle signal in the first step of the resampling process to screen. This effect is illustrated in Fig.9. Fig.9A shows two thin triangles as spikes sticking up from a larger basis. The figure depicts the contribution of each texel as the grey level. As shown in Fig.9A, without pre-filtering, the spikes appear blocky because texels either contribute fully or not at all. With triangle pre-filtering, the intensity fall-off going up the spike suggests the narrowing of the triangles, as is shown in Fig. 9B. Similar objects are shown in Figure 10, after addition of texture color (where the contribution is used as weight) and projection to the screen. Fig.10A shows the outcome without pre-filtering; Fig.10B with pre-filtering. Note that even without triangle pre-filtering, high frequencies are removed from the final images by the screen space resampler. But the aliasing artefacts that show as blocky shapes resulting from bad triangle signal sampling can not be removed by these filters. Also, since texture coordinates usually remain fixed for objects, any reconstruction (and triangle signal sampling) is consistent over subsequent frames. In inverse mapping, small triangles might cause flickering, because they are missed in one frame, and not in the next. This does not happen when pre-filtering and sampling the triangle signal in texture space are applied. So, the appearance of silhouette edges really benefits from triangle pre-filtering,

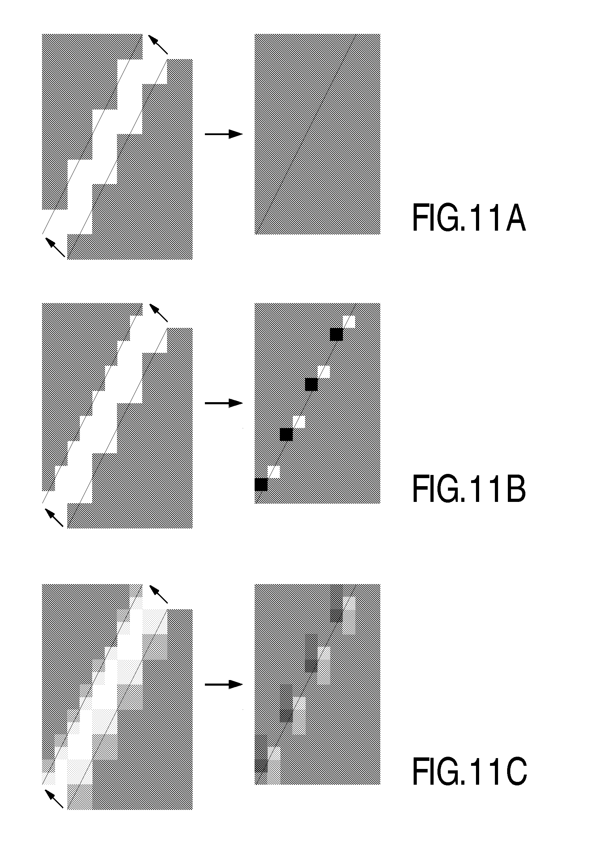

A problem with texture space rasterization is that the contributions of adjacent triangles might not complement each other exactly for pixels near a triangle edge. This can occur when the triangles are rasterized on different grids, or even just at different resolutions of the same grid, as is the case when a different mipmap level is chosen. This is shown in Fig. 11 (the figure shows the box-reconstructed signal used in the resampling process to screen). Fig.11A shows two adjacent primitives. On the left, the two triangles are shifted apart somewhat to show the reconstructed edges more clearly, on the right they are shown side by side to show the sum of the contributions. Since both triangles are sampled on the same grid, they complement each other exactly. Fig.11B shows the same situation, but with the upper left triangle rendered at a higher mipmap level. Holes and overlap are present in the combined signal. When using area pre-filtering on the triangle signal (as shown in Fig.11 C) the triangle problem is alleviated to a certain extent: the maximum amplitude of the error in this example has been halved. There is still some error left due to the box reconstruction of the texels: the box reconstruction in the coarser mipmap level distributes the contribution equally over an area corresponding to four areas in the finer level. These four areas are not enforced to have the same contribution value, so the sum of both will not be constant. But the error is smaller because the contribution near the edges is less dependent on the sample positions at which the rasterizer samples, and more on the actual underlying continuous triangle signal which is consistently complementary for adjacent triangles.

Improved reconstruction filter

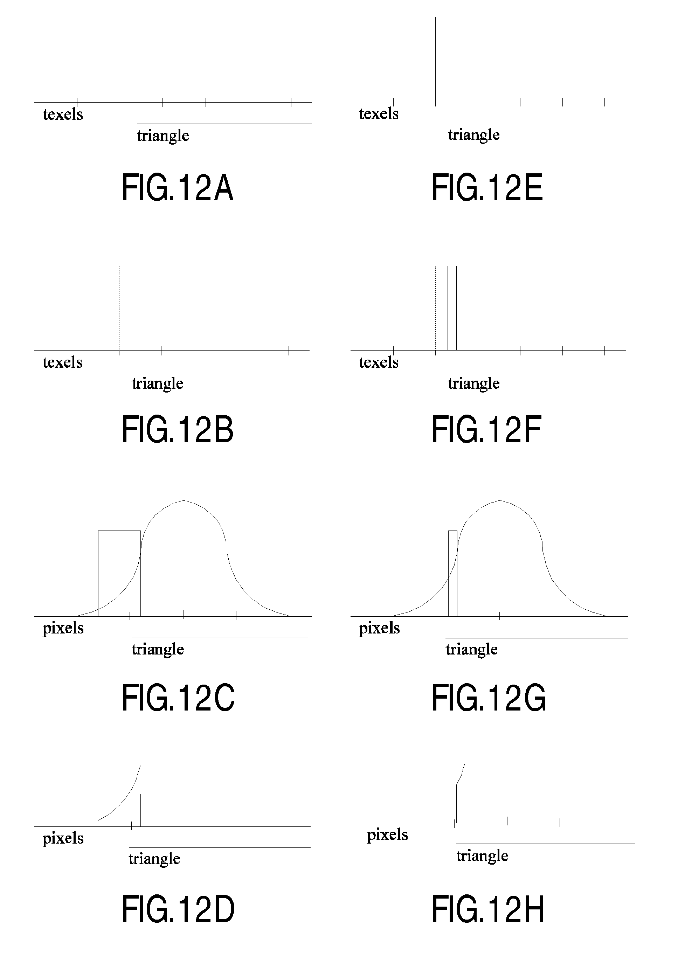

Above, the system according to the invention has been described as a pre-filtering process on the triangle signal. The system can also be seen as having an improved reconstruction process part of the resampling shown as item 140 in Fig.1. This explanation is also included here to provide additional insight into how the exact convolution is approximated. Combining a texture sample with the triangle signal can be seen as the start of the reconstruction process which reconstructs the texture signal before it is mapped to the screen. To explain what happens, the resampling process is depicted in Fig.12 for the one-dimensional case. Figs.12A to D show the resampling process where the triangle edge is not taken into account. Fig. 12A shows a texel near a triangle edge. A box filter (Fig. 12B) is used to reconstruct a continuous signal. This reconstructed signal is then mapped to screen space (Fig.12C), where it should be convolved with the pre-filter function. The area of the result (Fig.12D) is the weight for the texel that determines its contribution to the pixel. Figs.12E to H shows the same process taking the triangle edge into account, resulting in a smaller weight for the edge texel. The resampling process of Fig.5 weighs a texel according to the calculation depicted in Fig.6, resulting in the weight depicted in Fig.6D. This weight is then multiplied by the area coverage fraction. The result is an approximation of the weight depicted in Figure 12H. For the example in Fig.12 this provides an overall weight that is a slightly too low approximation for this triangle (but slightly too high for any adjacent triangle to the left of this triangle). By simply multiplying with the area fraction, the spatial weight distribution of the pre-filter segment is effectively assumed to be constant.

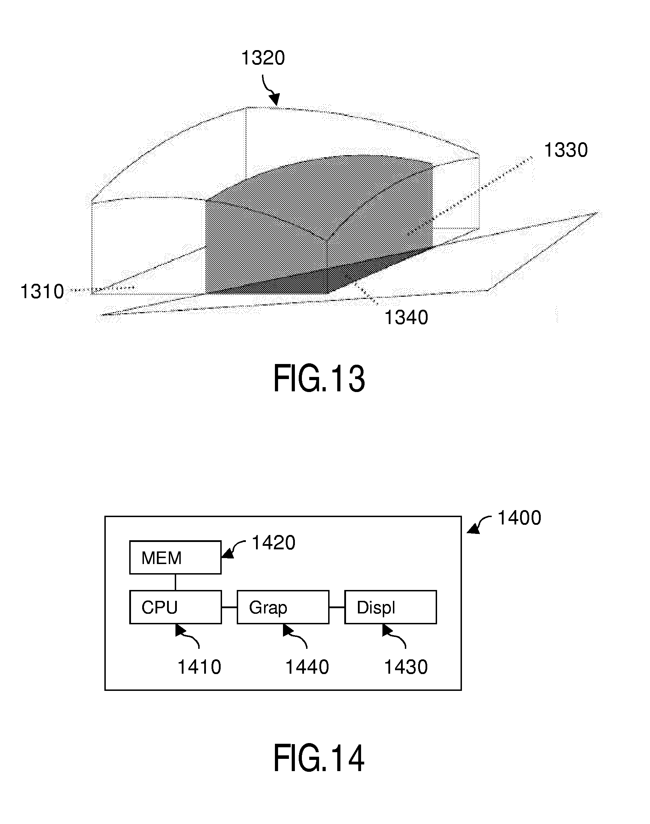

For 2D texture maps with 2D surfaces, the same principle holds. Fig. 13 depicts the mapped reconstruction footprint 1310 of a texel in screen space, with above it, the segment 1320 of the pre-filter for a certain texel. This is the 2D variant of Fig. 12C. Only the volume under this pre-filter segment which lies above the triangle should be taken into account. This is the dark volume 1330, similar to the area in Figure 12H. Instead of exactly calculating this volume, the area weighting of the texel in texture space (before the resampling process) approximates this volume by taking the total volume under the whole pre-filter segment (as is normally calculated by the resampling process), and multiplying that by the fraction 1240 of the area covered by the triangle in texture space (which under a general perspective mapping is not the same as the area fraction in screen space). An alternative way to look at Fig. 13 is to consider it in texture space. Then the reconstruction filter footprint is the rectangular footprint in texture space, and the pre-filter segment is a mapped (from screen to texture space) segment.

Fig. 14 shows a blocks diagram of a computer 1400, including a central processing unit 1410, a memory 1420, a display 1430, and a computer graphics system 1440 according to the invention. The computer may be a conventional computer, such as a personal computer, or workstation. The computer graphics system may be implemented using a graphics processor. Such a graphics processor may be operated under control of a program causing the graphics processor to execute the method according to the invention. The program may be fixedly embedded (e.g. in ROM), but may also be loaded from a background memory. In the latter case, the program may be distributed in any suitable for, e.g. using a record carrier, such as a CD-ROM, or wired or wireless communication means, such as Internet.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1.  A computer graphics system for rendering an image for display using forward texture mapping, pixels of the image being specified according to a predetermined pixel grid in a screen space; the image including at least one object modeled by primitives; the system including:

    -   a texture memory (134) for storing at least one texture map; texels of a texture map being specified according to a predetermined texel grid in a texture space;
    -   a rasterizer (120) operative to, for each primitive in the texture space, determine associated texels that at least partly fall within the primitive and to assign texel attributes to the associated texels;
    -   a contribution filter (810) operative to, for each primitive in the texture space, filter a continuous signal describing the primitive, yielding, when sampled for a given texel position, a respective contribution factor providing a measure of overlap of the corresponding texel with the primitive in texture space;
    -   a texel shader (130) operative to, for each primitive in the texture space, transform texel attributes of the associated texels to color attributes of the texels; and
    -   a screen space resampler (140) operative to resample color attributes of the texels according to the predetermined pixel grid forming pixel data for the display using the contribution factor as a weight.

2.  A computer graphics system as claimed in claim 1, wherein the contribution filter is an area filter, where the contribution factor depends on a percentage of area overlap of a texel footprint in the texel grid with the primitive.

3.  A computer graphics system as claimed in claim 2, wherein in the area filter is operative to analytically determine the area overlap.

4.  A computer graphics system as claimed in claim 3, where the analytic determination includes determining, for a texel footprint that is not is fully outside or inside a primitive, intersection points between a boundary of the primitive and a boundary of the texel footprint.

5.  A computer graphics system as claimed in claim 4, including pre-calculation boundary equations for the boundary of the primitive and applying the boundary equations to each of the texel footprint that is not is fully outside or inside the primitive.

6.  A computer including a central processing unit, a memory, a display, and a computer graphics system as claimed in claim 1.

7.  A method of rendering an image for display using forward texture mapping, pixels of the image being specified according to a predetermined pixel grid in a screen space; the image including at least one object modeled by primitives; the method including:

    -   storing at least one texture map; texels of a texture map being specified according to a predetermined texel grid in a texture space;
    -   for each primitive in the texture space:

    -   determining associated texels that at least partly fall within the primitive and to assign texel attributes to the associated texels;
    -   filtering a continuous signal describing the primitive, yielding, when sampled for a given texel position, a respective contribution factor providing a measure of overlap of the corresponding texel with the primitive in texture space; and
    -   transforming texel attributes of the associated texels to color attributes of the texels; and
    -   resampling color attributes of the texels according to the predetermined pixel grid forming pixel data for the display using the contribution factor as a weight.

8.  A computer program operative to cause a processor to perform the method of claim 7.

FIG.1

FIG.2

310

FIG.3

320    340    330    350

400

410

FIG.4

continuous
discrete

texture

triangle

prefilter

sample

texture   screen
space     space

resample

pixels

FIG.5

FIG.6A

FIG.6B

FIG.6C

FIG.6D

FIG.7A  FIG.7B

FIG.8

FIG.9A

FIG.9B

FIG.10A

FIG.10B

FIG.11A

FIG.11B

FIG.11C

EP 1 489 560 A1

FIG.12A

FIG.12E

FIG.12B

FIG.12F

FIG.12C

FIG.12G

FIG.12D

FIG.12H

FIG.13

MEM — 1420

| CPU | Grap | Displ |

1410     1440     1430

1400

FIG.14

**European Patent Office**

**EUROPEAN SEARCH REPORT**

Application Number

EP 03 10 1763

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BAOQUAN CHEN ET AL: "Forward image mapping" VISUALIZATION '99. PROCEEDINGS SAN FRANCISCO, CA, USA 24-29 OCT. 1999, PISCATAWAY, NJ, USA, IEEE, US, 24 October 1999 (1999-10-24), pages 89-514, XP010364950 ISBN: 0-7803-5897-X | 1,6-8 | G06T15/20 |
| Y | * page 93, left-hand column, paragraph 4.2 - page 94, right-hand column, paragraph 5; figure 3 * | 2-5 | |
| Y | EP 0 458 571 A (CANON KK) 27 November 1991 (1991-11-27) * claims 2,3 * | 2-5 | |
| A | EP 0 751 486 A (MATSUSHITA ELECTRIC IND CO LTD) 2 January 1997 (1997-01-02) * page 19, line 28 - page 20, line 7; claim 25; figure 15 * | 1-8 | |

TECHNICAL FIELDS SEARCHED (Int.Cl.7)

G06T

The present search report has been drawn up for all claims

| Place of search | Date of completion of the search | Examiner |
|---|---|---|
| THE HAGUE | 3 October 2003 | Perez Molina, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**EP 1 489 560 A1**

**ANNEX TO THE EUROPEAN SEARCH REPORT
ON EUROPEAN PATENT APPLICATION NO.**                    EP 03 10 1763

This annex lists the patent family members relating to the patent documents cited in the above-mentioned European search report.
The members are as contained in the European Patent Office EDP file on
The European Patent Office is in no way liable for these particulars which are merely given for the purpose of information.

03-10-2003

| Patent document cited in search report | | Publication date | Patent family member(s) | | Publication date |
|---|---|---|---|---|---|
| EP 0458571 | A | 27-11-1991 | JP | 4025892 A | 29-01-1992 |
| | | | EP | 0458571 A2 | 27-11-1991 |
| EP 0751486 | A | 02-01-1997 | EP | 0751486 A2 | 02-01-1997 |
| | | | JP | 3068007 B2 | 24-07-2000 |
| | | | JP | 9073547 A | 18-03-1997 |
| | | | US | 5852446 A | 22-12-1998 |

EPO FORM P0459

For more details about this annex : see Official Journal of the European Patent Office, No. 12/82

19